# EUROPEAN PATENT SPECIFICATION

(11) **EP 0 263 696 B1**
(45) Date of publication and mention of the grant of the patent: **03.02.1993**
(21) Application number: 87308889.2
(22) Date of filing: 07.10.1987
(51) Int. Cl.: G06K 7/10

(54) **Laser beam scanner**
Laserstrahlabtaster
Lecteur à laser

(30) Priority: 08.10.1986 JP 239903/86; 30.04.1987 JP 107204/87
(43) Date of publication of application: 13.04.1988
(73) Proprietor: FUJITSU LIMITED, Kawasaki-shi, Kanagawa 211 (JP)
(72) Inventor: Yamazaki, Kozo, Zama-shi Kanagawa 228 (JP); Ichikawa, Toshiyuki, Atsugi-shi Kanagawa 243 (JP); Ikeda, Hiroyuki, Yomohama-shi Kanagawa 231 (JP); Inagaki, Takefumi, Kawasaki-shi Kanagawa 215 (JP); Aritake, Hirokazu, Kawasaki-shi Kanagawa 215 (JP); Yamagishi, Fumio, Ebina-shi Kanagawa 243-04 (JP)
(74) Representative: Fane, Christopher Robin King

(56) References cited:
- EP-A- 0 062 545
- EP-A- 0 132 956
- IBM TECHNICAL DISCLOSURE BULLETIN, vol. 26, no. 12, May 1984, USA; L. D. DICKSON: "Aberrant holographic focusing element for post-objective holographic deflector"

## Description

The present invention relates to laser beam scanners, utilising holograms and laser beams, for example for reading bar codes or the like.

Such a scanner employs holograms in its optical system to cause a laser beam to be directed in accordance with a predetermined scanning pattern. Use of such a scanner, giving a complicated scanning pattern, can facilitate the construction of a bar code reader of high reliability and accuracy.

Such a bar code reader can be utilised in a supermarket or the like as terminal equipment of a POS (point of sales) system which manages sales data in Real Time by direct input of the sales data to a computer from cash registers.

At a supermarket, the bar code reader is placed on a register table with a cash register, and a bar code marked on a sales article is scanned and read by the reader while the article is moved thereabove by hand. In such a situation, it is desirable that the bar code reader be small in size, especially in height, for the sake of operational convenience and economy of space.

Reducing the height of the bar code reader is highly desirable, for example, in supermarkets in Europe, where the sales clerk is obliged to sit to operate the bar code reader.

Such use of holograms to simultaneously function as a conventional rotatable polygon mirror and a conventional scanning lens system is similar in principle to the use of a rotating hologram disc in a scanning system described in EP-A-0132956.

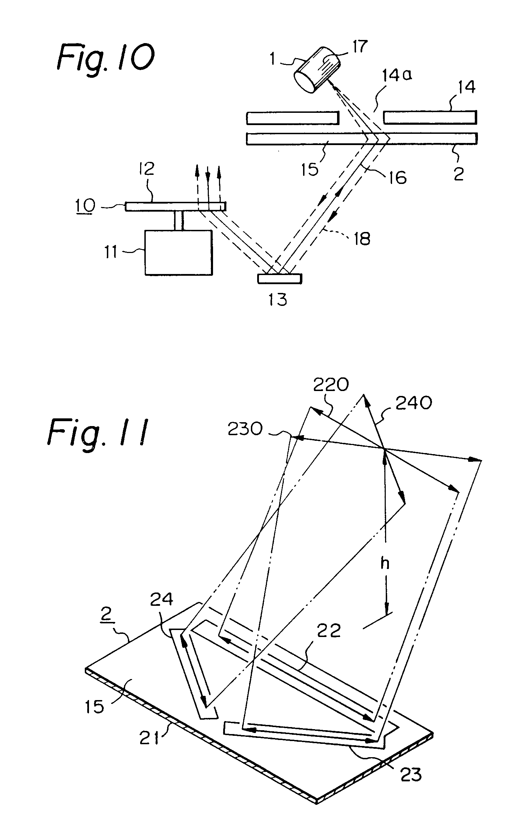

As previously-proposed bar code reader employing a laser beam scanner will now be discussed in more detail with reference to Figures 10, 11 and 12 of the accompanying drawings.

Figure 10 shows a schematic side view of the bar code reader, which employs a laser beam scanning system 10 comprising a motor 11 driving a rotatable hologram disc 12, having a plurality of hologram facets, a mirror 13, a stationary hologram member 2, a window cover 14 and a scanning window 15 (provided by a portion of the stationary hologram member 2 that is exposed through an opening 14a in the window cover 14). A light beam 16, diffracted through the hologram disc 12 and reflected by the mirror 13, reaches the stationary hologram member 2, where the beam 16 is further diffracted to produce an external scanning beam which impinges upon a bar code 17 marked on a sales article 1 in an operation space above the opening 14a.

Scattered light 18, from the bar code 17, propagates in the direction opposite to the scanning beam 16, as illustrated by broken lines, and reaches the hologram disc 12, where the scattered light 18 is diffracted towards an optical detector (not shown) which responds to the received light so as to provide an output representative of the bar code 17.

The scattered light 18, from the bar code 17, is divergent until it reaches the stationary hologram member 2. However, scattered light passing back through the opening 14a to the hologram member 2 is not widely divergent, because of the positional relationship between the hologram member 2 and the bar code 17. This scattered light is converted by the stationary hologram member 2 to a substantially parallel light beam that passes to the hologram disc 12 without divergence.

The scanning beam emerging via the opening 14a scans the surface of the bar code 17 so as to trace out a scanning line thereover. In order to ensure scanning of the entire bar code 17, irrespective of variations in the location and movement of the article 1 above the opening 14a, a plurality of scanning lines are required to be traced out in different directions.

Figure 11 shows a perspective view of the scanning window 15 constituted by the exposed portion of the stationary hologram member 2, which member comprises a transparent substrate 21 and strip-form holograms 22, 23 and 24 formed on the substrate 21. A scanning pattern comprising a plurality of scanning lines 220, 230 and 240, corresponding respectively to the hologram strips 22, 23 and 24 and intersecting each other, is formed at some distance above the stationary hologram member 2.

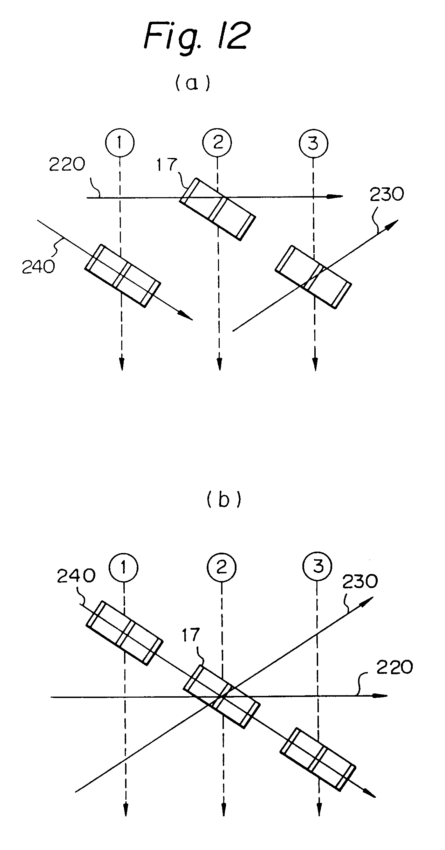

With arrangement of Figure 10, wherein the window cover 14 and the stationary hologram member 2 having the strip-form hologram arrangement of Figure 11 are arranged in close proximity, the bar code 17 may not always be scanned by the scanning beam. For example, in the diagrammatic plan view of Fig. 12(a), which relates to a plane close to the window cover 14, the bar code 17 being moved along a broken line ① is read, but the bar code being moved along either of the broken lines ② and ③ is not read. This is because, with the bar code 17 inclined as depicted in Fig. 12(a), only the scanning line 240 can pass through the entire length of the bar code. The scanning lines 220 and 230 cannot pass through the entire lengh of the bar code, owing to the difference in orientation between the scanning lines and the bar code 17. Therefore, the bar code 17 being moved along the broken line ② or ③, in the illustrated plane close to the window cover 14, cannot be read because the scanning line 240 does not extend as far as the broken line ② or ③.

On the other hand, in a plane spaced further above the scanning window the scanning lines 220, 230 and 240 intersect each other as illustrated diagrammatically in Figure 12(b). Therefore, in that higher plane the bar code 17 can be read by the scanning line 240 when the article bearing the code is moved along any one of the broken lines ①, ② and ③. The height of this plane of intersection of the scanning lines, above the stationary hologram member 2, is more than 100 mm for the previously-proposed bar code reader, so that an inconveniently tall space is required for operation of that bar code reader.

According to the present invention there is provided a laser beam scanner comprising:
a hologram window 8 incorporating a plurality of layer-form holograms, arranged in overlying relationship to one another; and
optical means arranged for causing a laser beam to be incident on the hologram window and to scan the said layer-form holograms so that diffraction of the beam by the individual holograms produces respective scanning beams which emerge from a main face of the hologram window so as to trace out in turn, in an operation space adjacent to the said main face, respective scanning lines which intersect one another;
the arrangement being such that each of the said scanning beams, after leaving the ,hologram that produced that beam by diffraction, emerges from the said main face without having been incident upon any other one of the holograms at such an angle as to satisfy the Bragg condition therein.

In an embodiment of the present invention, because of the overlying relationship of the holograms, intersecting scanning lines are produced close to the hologram window, thereby avoiding the former need to space a scanned bar code at a distance of 100mm or more above that window.

Reference will now be made, by way of example, to the accompanying drawings, in which:
Figure 1 is a schematic side view of a hologram window for use in a laser beam scanner embodying the present invention;
Figure 2 is a schematic perspective view of parts of a first embodiment of the present invention;
Figure 3 is a schematic perspective view of parts of a second embodiment of the present invention;
Figure 4 is a schematic perspective view of parts of a third embodiment of the present invention;
Figure 5 is a schematic perspective view of parts of a fourth embodiment of the present invention;
Figure 6 is an external perspective view of a laser beam scanner embodying the present invention;
Figure 7 shows schematic perspective views of internal parts of the laser beam scanner of Figure 6;
Figure 8 is a perspective view of assembled parts of the laser beam scanner of Figure 6;
Figures 9A and 9B are explanatory side views of an optical system of the laser beam scanner of Figure 6, showing beam paths therein;
Figure 10 (described hereinbefore) is a schematic side view of parts of a previously-proposed laser beam scanner;
Figure 11 is a perspective view of part of the scanner of Fig. 10;
Figures 12(a) and 12(b) are plan views for explaining problems associated with the laser beam scanner of Figure 10;
Figure 13 is a perspective explanatory view showing scanning lines traced out by scanning beams of a laser beam scanner embodying the present invention;
Figure 14(a) shows a perspective view of a layer-form hologram;
Figure 14(b) shows a sectional view of the hologram of Figure 14(a); and
Figure 14(c) is a graph illustrating the dependence of diffraction efficiency upon the angle of incidence in the hologram of Figure 14(a).

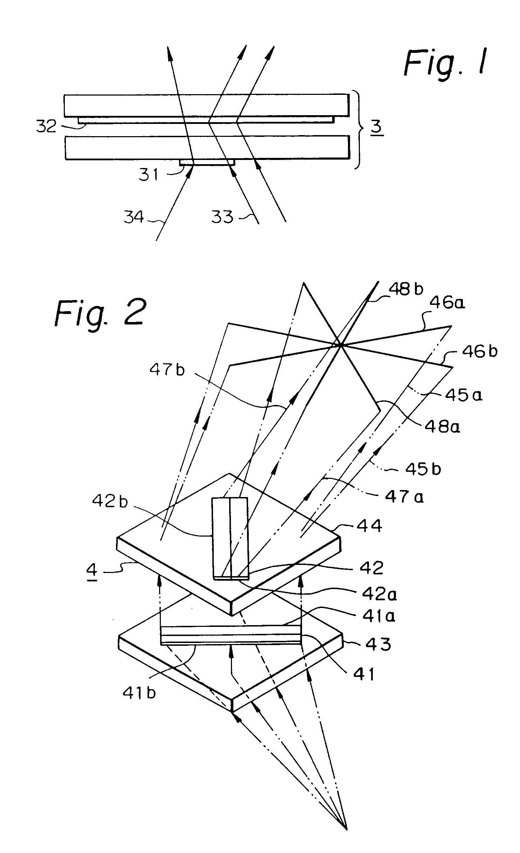

Fig. 1 shows a hologram window 3 having incorporated therein at least two layer-form holograms, comprising strip-form holograms 31 and 32, arranged in an overlying relationship to one another so that the hologram strip 32 crosses the strip 31. A laser beam scanner employing the window 3 has an optical system for directing laser beams 33 and 34 so that they are diffracted respectively by the strip-form holograms 31 and 32, thereby producing respective scanning beams that emerge from the scanner by way of the upper main face of the window 3. An optical detector (not shown) is installed in the scanner to detect signal light scattered back, from an article under examination, through the hologram strips 31 and 32 of the hologram window 3.

If one hologram strip is simply stacked above another, in a crossing relationship, a part of the laser beam directed towards the upper hologram, from below, to be diffracted thereby, will pass through the overlapped area of the lower hologram strip, where it is crossed by the upper hologram strip, and may be diffracted by the lower hologram strip. Also, the scanning beam formed by the lower hologram strip may be diffracted again by the overlapping region of the upper hologram strip. Therefore, a continuous scanning beam will not generally be obtained if the two holograms are simply stacked one above the other.

It is sometimes possible to read a bar code by using such discontinuous scanning beams, but a continuous scanning beam is preferable. Continuous scanning beams can be obtained by an arrangement wherein the scanning beam 34 diffracted by the lower hologram strip 31 impinges on the upper hologram strip 32 at an angle such that the Bragg condition (described below) is not satisfied in that strip, and wherein the laser beam 33 to be diffracted by the upper hologram 32 is incident on the lower hologram strip 31 at an angle such that the Bragg condition is not satisfied in the strip 31. The scanning beam produced by diffraction in the lower hologram strip 31 then passes through the upper hologram without being diffracted thereby, and the laser beam to be diffracted by the upper hologram strip 32 passes through the lower hologram strip 31 without being diffracted thereby.

With such an arrangement, in an embodiment of the present invention, there is no longer a space (h, in Fig.11) between the hologram window and a lowest level where the scanning lines intersect. The scanning beams in an embodiment of the invention will trace out intersecting scanning lines on an article placed on the hologram window itself. Accordingly, in such an embobiment of the invention, a window cover defining the lowest part of the usable operation space can be positioned very close to the hologram window, enabling the overall height of the space needed for the scanner to be kept desirably small.

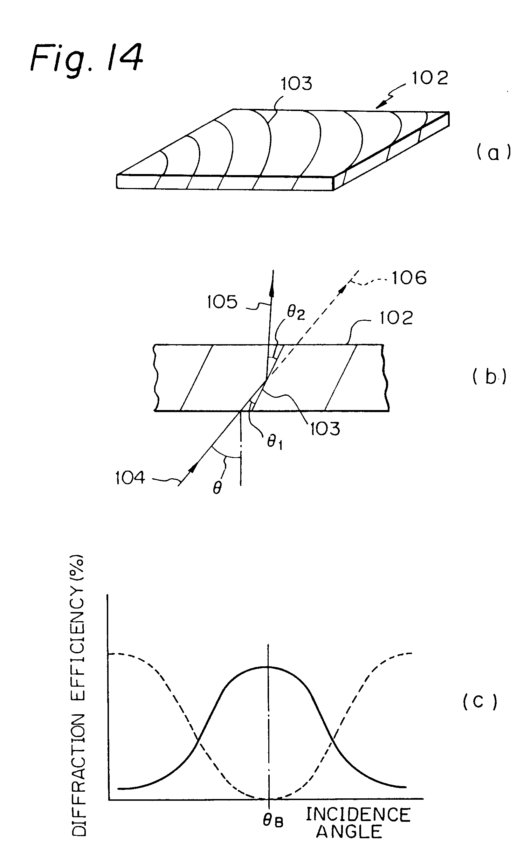

The Bragg condition will now be explained with reference to Figures 14(a), 14(b) and 14(c).

Fig. 14(a) shows interference fringes 103 in a layer-form hologram 102. Light passing through the hologram layer 102 is diffracted in a manner dependent upon the pattern of the interference fringes 103. Each interference fringe 103 is inclined, as seen in a cross-section of the hologram layer 102, as illustrated in Figure 14(b). When a laser beam 104 is incident on the hologram layer 102 at an angle ϑ as shown, so that it impinges on the fringes 103 at a glancing angle ϑ₁, diffraction by the interference fringes 103 may cause light to leave the fringes 103 at a glancing angle ϑ₂ as shown.

However, there is an angle ϑ₂ (the "Bragg angle") such that when ϑ₁ = ϑ_{B} a diffracted beam 105 of maximum intensity emerges at the angle ϑ₂ = ϑ_{B}, because the well-known Bragg condition is then satisfied so as to give maximum constructive interference. For a given layer-form hologram it is thus possible to find a Bragg angle ϑ_{B} such that when ϑ₁ = ϑ_{B} the diffraction efficiency is a maximum. If ϑ₁ differs significantly from ϑ_{B}, the Bragg condition will not be satisfied.

A part of the incidence beam 104 impinging on the hologram 102 penetrates directly therethrough, without being diffracted, as a transmitted beam 106 (shown by a broken line). The intensity of the transmitted beam 106 increases in accordance with the deviation of the glancing incidence angle ϑ₁, of the beam 104, from the Bragg angle ϑ_{B}, as illustrated in the graph of Figure 14(c). The abscissa represents the glancing incidence angle ϑ₁ of the beam impinging on the hologram, and the ordinate represents the diffraction efficiency. The solid line graph represents the diffracted beam 105, the luminous strength (intensity) of which is maximised at the Bragg angle ϑ_{B}. The broken line graph represents the directly transmitted beam 106, the intensity of which is almost zero at the Bragg angle ϑ_{B} and increases in accordance with the deviation of the incidence angle ϑ₁ from the Bragg angle ϑ_{B}.

In an embodiment of the present invention a plurality of layer-form holograms are incorporated in a hologram window, disposed in an overlying relationship to one another, the arrangement being such that a laser beam to be diffracted by a particular one of the hologram layers passes first through one or more preceding hologram layers without being significantly diffracted thereby, and the beam diffracted by that particular hologram layer then penetrates succeeding hologram layers without being diffracted significantly thereby. This is achieved by ensuring that, where diffraction is to be avoided, the relevant incidence angle of the beam is different from the Bragg angle. In practice, it is generally sufficient to make the difference between the relevant incidence angle and the Bragg angle such that only about one-tenth of the incident beam flux is diffracted.

Fig. 2 shows components of a hologram window 4 which comprises a first hologram strip 41 formed on a transparent substrate 43 such as a glass plate, and a second hologram strip 42 formed on a transparent substrate 44 such as a glass plate. The first hologram strip 41 comprises two strip-form holograms 41a and 41b having respective different diffraction directions. The second hologram strip 42 comprises two strip-form holograms 42a and 42b having respective different diffraction directions. The hologram window 4 is assembled by fixing two transparent substrates 43 and 44 together in such a manner that the strip 42 overlies and extends transversely with respect to the strip 41, so as to cross thereover.

With such a hologram window 4, a scanning laser beam directed onto the hologram 41a is diffracted thereby and propagated therefrom as a diffracted scanning beam 45a directed so that where it passes through the hologram strip 42 the beam 45a does not satisfy the Bragg condition in the hologram strip 42. The scanning beam 45a therefore passes through the transparent substrate 44 and the hologram strip 42 without being significantly diffracted thereby, and traces out a continuous scanning line 46a in a plane above the window 4. Similarly, a scanning laser beam incident on the hologram 41b is diffracted thereby and propagates therefrom as a diffracted scanning beam 45b, the direction of which does not satisfy the Bragg condition in the upper hologram strip 42. The scanning beam 45b accordingly penetrates the transparent substrate 44 and the hologram strip 42 without being diffracted, and traces out a continuous scanning line 46b.

On the other hand a scanning laser beam directed so that it does not satisfy the Bragg condition in the hologram strip 41 penetrates the lower substrate 43 and the hologram strip 41, without being diffracted significantly thereby, and is incident on the upper hologram strip 42, for example on the strip-form hologram 42a. The beam incident on the hologram 42a is diffracted thereby and propagated therefrom as a diffracted scanning beam 47a which traces out a continuous scanning line 48a. Similarly, a scanning laser beam, the direction of which does not satisfy the Bragg condition in the hologram strip 41, penetrates the transparent substrate 43 and the hologram strip 41, without being diffracted significantly thereby, and is incident on the hologram 42b. The beam incident on the hologram 42b is diffracted thereby and propagated therefrom as a diffracted scanning beam 47b which traces out a continuous scanning line 48b.

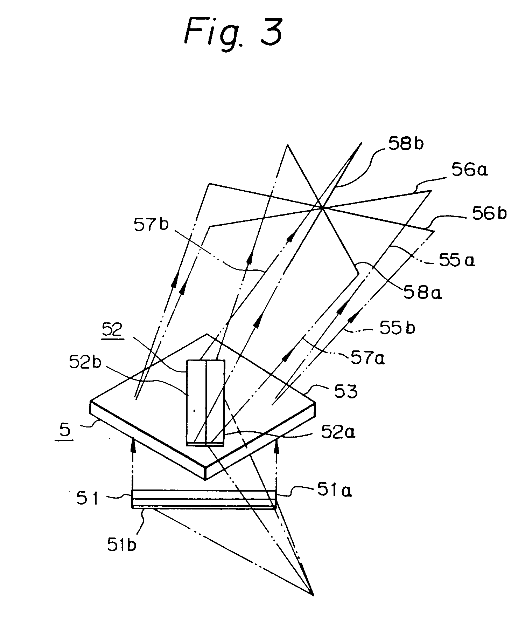

In Fig. 3, a hologram window 5 comprises a transparent substrate 53 such as a glass plate, a first hologram strip 51 coated on the lower surface of the transparent substrate 53, and a second hologram strip 52 coated on the upper surface of the transparent substrate 53. The first hologram strip 51 comprises two strip-form holograms 51a and 51b having different diffraction directions. The second hologram strip 52 comprises two holograms 52a and 52b having different diffraction directions. Each of the hologram strips 41, 42, 51 and 52 may comprise phase-type or surface relief-type holograms.

A scanning laser beam incident on the hologram 51a is diffracted thereby and propagated therefrom as a diffracted scanning beam 55a, the direction of which does not satisfy the Bragg condition in the upper hologram strip 52. Therefore, the scanning beam 55a diffracted by the hologram 51a penetrates the transparent substrate 53 and the upper hologram strip 52 without being diffracted by the hologram strip 52, and traces a continuous scanning line 56a. Similarly, a scanning laser beam incident on the lower hologram 51b is diffracted by the hologram 51b and propagated therefrom as a diffracted scanning beam 55b, the direction of which does not satisfy the Bragg condition in the upper hologram strip 52. Therefore, the scanning beam diffracted by the lower hologram 51b penetrates the transparent substrate 53 and the upper hologram strip 52 without being diffracted, and traces a continuous scanning line 56b.

On the other hand, a scanning laser beam directed onto the hologram window 5 with an incidence angle not satisfying the Bragg condition in the hologram strip 51, penetrates the hologram strip 51 and the transparent substrate 53 without being diffracted by the hologram strip 51 and is incident on the hologram 52a. The incident beam is diffracted by the hologram 52a and propagated therefrom as a diffracted scanning beam 57a which traces a continuous scanning line 58a. Similarly, another scanning laser beam, directed onto the hologram window 5 with an incidence angle not satisfying the Bragg condition in the hologram strip 51, penetrates the transparent substrate 53 and the hologram strip 51 without being diffracted by the hologram strip 51 and is incident on the upper hologram 52b. The incident beam is diffracted by the hologram 52b and propagated therefrom as a diffracted scanning beam 57b which traces a continuous scanning line 58b.

In contrast to the arrangement illustrated in Figure 11, when using a laser beam scanner employing the above-mentioned hologram window 4 or 5, it is not necessary to raise a scanned article to a predetermined height (h) above the window before a scanning pattern of crossed scanning lines is encountered, so the height of the necessary operating space for the scanner is reduced.

Note that in the scanner of Figures 10 and 11 scanning of the bar code 17 by the beam 16 is brought about by deflecting the laser beam by the optical scanning system 10 and directing the resulting scanning beam onto the surface of the bar code 17 via the mirror 13 and the stationary hologram member 2. The range of movement of the scanning beam spot at the location of the bar code 17 will therefore depend upon the path length of the scanning beam, from the system 10 to the bar code 17. In particular the scanning range of the beam spot at the bar code 17 will be narrowed in accordance with any shortening of the optical distance from the scanning system 10 to the bar code 17, if the scanning angle of the beam at the scanning system 10 remains the same.

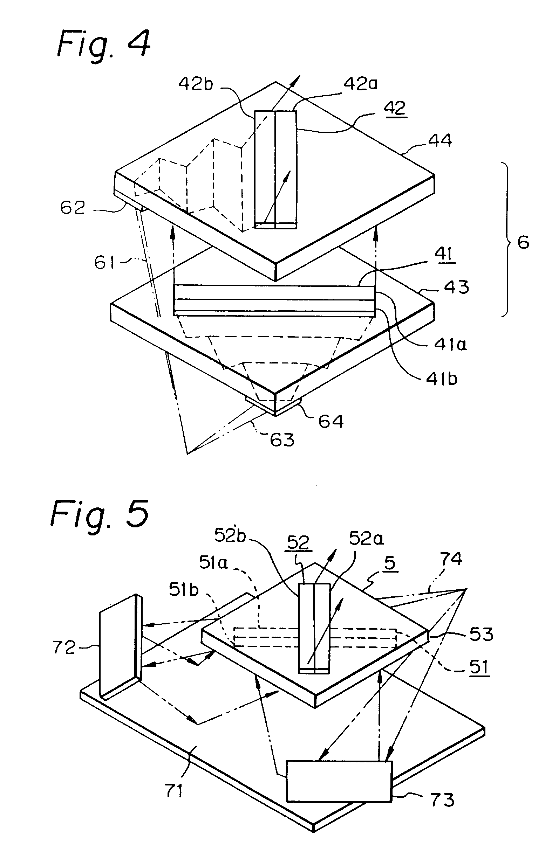

Figures 4 and 5 illustrate how the optical path length of the scanning laser beam can be kept sufficiently large to give an adequate scanning range at a distance, above a hologram window, that is reduced as compared with the arrangement of Figures 10 and 11.

In Fig. 4, a hologram window 6 comprises a first hologram strip 41 formed on a lower transparent substrate 43 and a second hologram strip 42 formed on an upper transparent substrate 44, similar to the embodiment of Figure 2. The first hologram strip 41 comprises two strip-form holograms 41a and 41b having different diffraction directions. The second hologram strip 42 comprises two strip-form holograms 42a and 42b having different diffraction directions. A hologram 62 for introducing a scanning laser beam 61 into the upper transparent substrate 44 is provided at a corner thereof. Also, a hologram 64 for introducing a scanning laser beam 63 into the lower transparent substrate 43 is provided at a corner thereof.

The scanning laser beam 61 is introduced into the transparent substrate 44 through the hologram 62 and propagates in that substrate, undergoing repeated total internal reflections therein, to the hologram 42a or 42b. During the propagation within the transparent substrate 44, the lateral range of movement of the scanning laser beam 61 is gradually widened. Also, the scanning laser beam 63 is introduced into the transparent substrate 43 through the hologram 64 and propagates in that substrate, undergoing repeated total internal reflections therein, to the hologram 41a or 41b. During the propagation within the transparent substrate 43, the lateral range of movement of the scanning laser beam 63 is widened. Thus the path length required to widen the scanning range adequately, i.e. the lateral range of movement of the eventual beam spot on an article to be examined, is obtained by virtue of repeated total internal reflections within each of the transparent substrates.

In Fig. 5, a hologram window 5 comprises a first hologram strip 51 formed on a lower surface of a transparent substrate 53, and a second hologram strip 52 formed an upper surface of the transparent substrate 53. The hologram strip 51 comprises two strip-form holograms 51a and 51b having different diffraction directions. Also, the second hologram 52 comprises two strip-form holograms 52a and 52b having different diffraction directions. A floor mirror 71 and a plurality of side mirrors 72 and 73 are disposed below the hologram window 5. A scanning laser beam 74, which is approximately parallel to the hologram window 5, impinges on the side mirrors 72 and 73 in turn, is reflected by each of the mirrors 72 and 73, further reflected by the floor mirror 71, and then propagates to the hologram strip 51 or 52.

By disposing the side mirrors 72 and 73 at an appropriate distance from the optical system producing the initial scanning of the beam 74, the path length from that system to the window 5 is made sufficiently large, to give an adequate scanning range immediately above that window.

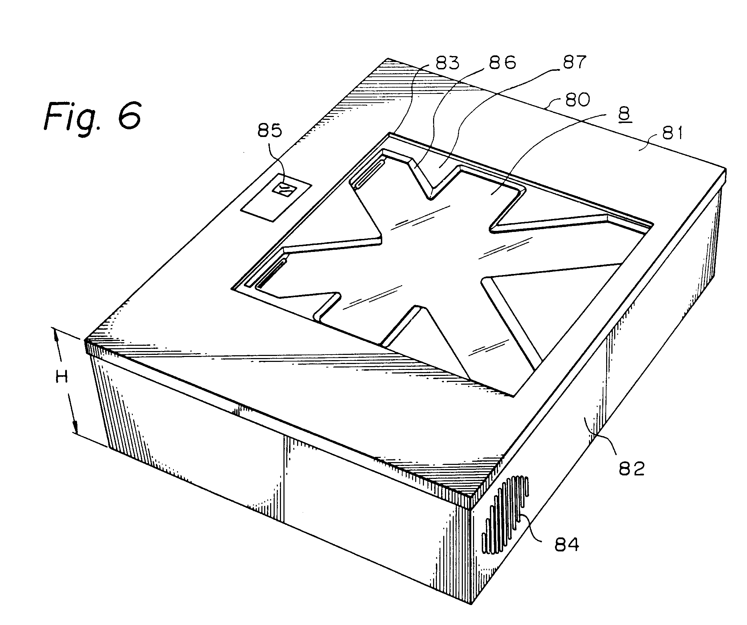

A laser beam scanner embodying the present invention will now be described with reference to Figures 6 to 9.

The scanner is housed in a plastic case 80 which comprises an upper cover 81 and a lower box 82. A rectangular opening 83 is formed in the upper cover 81, and a vent 84 for a cooling fan is formed by a plurality of slits in one side wall of the lower box 82. A confirmation lamp 85 for indicating whether or not a bar code has been read is provided on the upper cover 81. A window cover 87 having an opening shaped like an 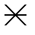 is disposed inside the upper cover 81 at the location of the opening 83, and a hologram window is disposed below the window cover 87.

The case 80 can be very compact. For example, the case 80 can have a height of less than 85 mm (in fact a height of 79 mm has been achieved) and the longitudinal x lateral dimensions can be less than 250 mm x 310 mm (in fact 222 mm x 305 mm has been achieved). The case 80 houses the hologram window 8, optical scanning means described below, and a power source for the optical scanning means.

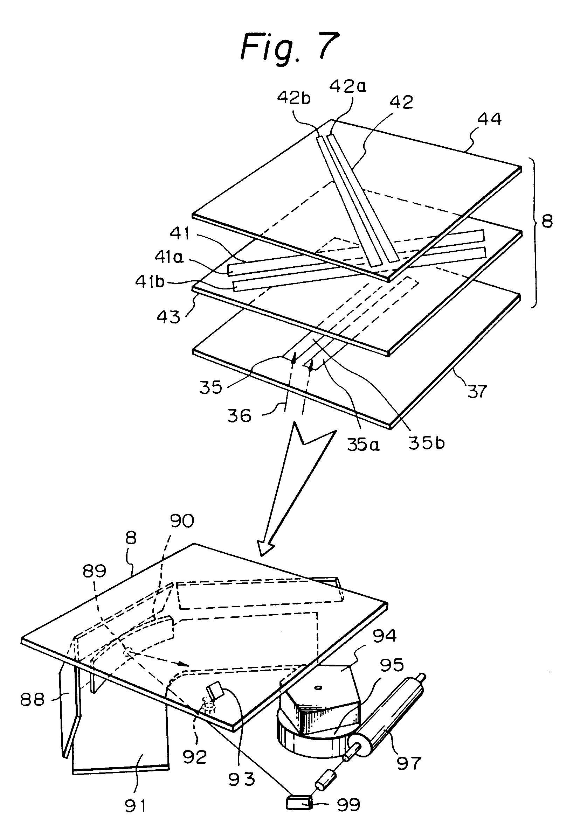

As illustrated in Fig. 7, the hologram window 8 is a three layer structure comprising, in addition to the two layers of Fig. 2 (i.e. the transparent substrate 43 having the hologram strip 41 formed thereon and the transparent substrate 44 having the hologram strip 42 formed thereon), a transparent substrate 37, such as a glass plate, having a hologram strip 35 formed thereon. The three substrate layers are stacked and adhesively fastened together.

The hologram strip 35 comprises two strip-form holograms 35a and 35b having different respective diffraction directions. The holograms may be phase type or surface relief type holograms.

In the assembled state of the hologram window 8, the hologram strips 41, 42 and 35 cross over one another so as to form, as seen from above the window, the shape of an 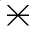 . When a scanning laser beam 36 is diffracted by the hologram strip 35, the resulting diffracted beam is directed so that it does not satisfy the Bragg condition in the other two hologram strips 41 and 42. When the scanning laser beam is to be diffracted by either of the hologram strips 41 and 42 that beam is passed through the hologram strip 35 at an incidence angle not satisfying the Bragg angle in that hologram strip 35.

The hologram window 8, as illustrated in a lower part of Fig. 7, is disposed above an optical system comprising three side mirrors 88, a concave mirror 90 having an aperture 89, a floor mirror 91, an optical detector 92, a light collector mirror 93 for guiding light to the optical detector 92, a rotatable polygon mirror 94 having five sides, and a motor 95 for driving the polygon mirror 94.

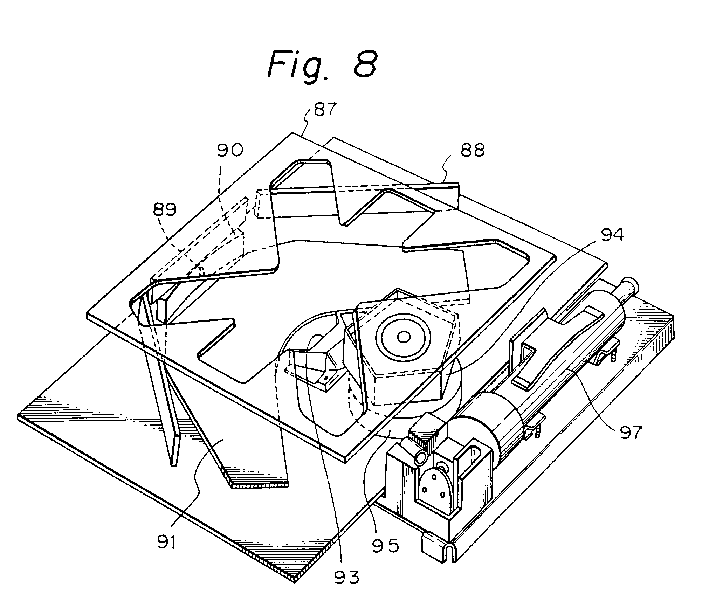

Figure 8 shows the window cover 87 that is disposed on the hologram window 8 (itself not shown in Fig. 8), and an He-Ne laser source 97 mounted on a base on which the aforementioned optical system is also mounted together with the power and drive circuits (not shown) for driving the laser source 97 and the motor 95.

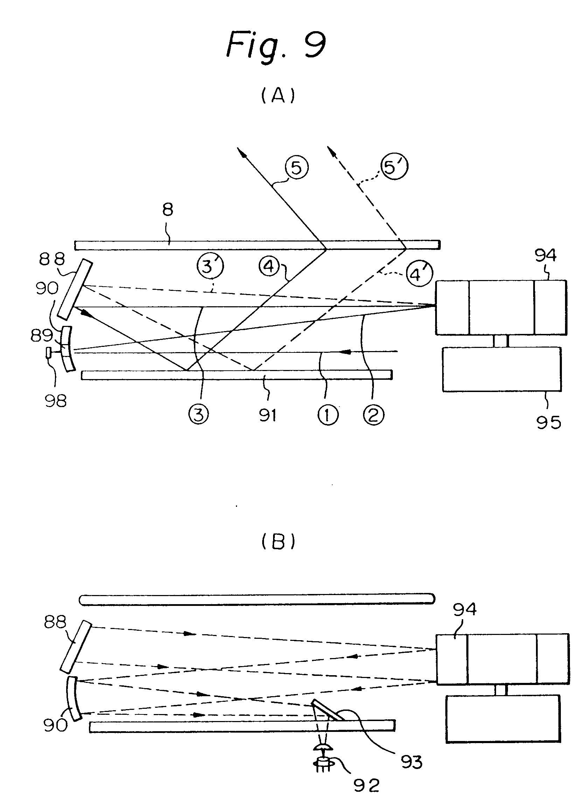

As illustrated in Fig. 9, a tiny mirror 98 is disposed behind the concave mirror 90 so as to face the aperture 89 thereof. The optical system, the laser source 97, and the power circuit are assembled and housed within the case 80 of Fig. 6.

The laser source 97 emits a laser beam which is reflected by the mirror 99 (Fig. 7) and propagates toward the concave mirror 90. As illustrated in Fig. 9(A), the laser beam ① passes through the aperture 89 in the concave mirror 90 and is incident on the tiny mirror 98 behind the concave mirror 90. The mirror 98 reflects the beam back through the aperture 89 to the polygon mirror 94 as a reflected beam ②. The reflected beam ② is incident on the side surfaces of the polygon mirror 94 as it rotates, and is reflected by the mirror constituting each side of the polygon mirror 94 so as to pass to the side mirrors 88 as a scanning beam ③ or 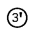 , according to the inclination and rotation of the mirror surface on which the beam is incident. Each scanning beam ③ or 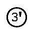 moves across the three side mirrors 88 (Fig. 7) and is reflected by the side mirrors 88 in turn, and the floor mirror 91, so that it is directed toward the hologram window 8 as a reflected beam ④ or 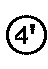 , which is diffracted by the hologram window 8 and propagated therefrom as a scanning beam ⑤ or 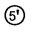 . The scanning beams ⑤ and 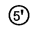 move in accordance with a predetermined scanning pattern.

Scattered signal light from the bar code is propagated, in the direction opposite to the scanning beam direction, back to the side mirrors 88 by way of the hologram window 8 and the floor mirror 91 along the light paths ⑤ and ④, or 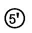 and 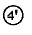 . As illustrated in Fig. 9(B), the back-scattered signal light is reflected by the side mirrors 88 so that it propagates to the polygon mirror 94, where that signal light is reflected towards the concave mirror 90. The signal light is then reflected by the concave mirror 90 so that it converges towards the optical detector 92 via the mirror 93, and is detected by the optical detector which is responsive to that signal light from the bar code.

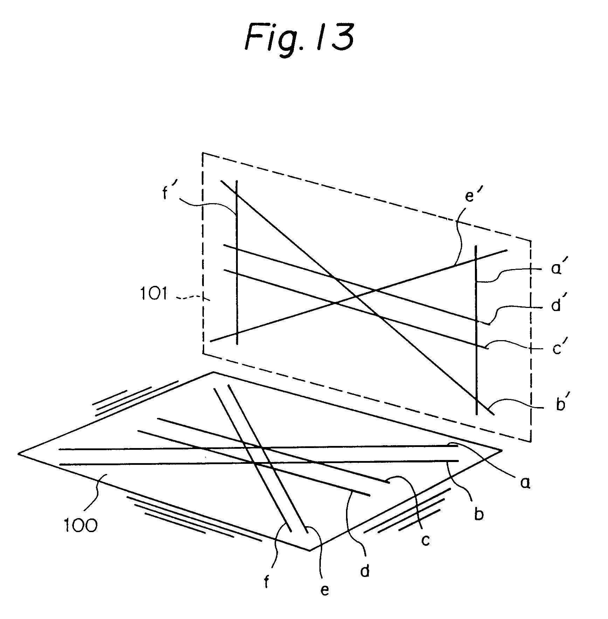

An example of a scanning pattern traced out by diffracted beams in an embodiment of the present invention is illustrated in Fig. 13. A scanning window 100 (corresponding to the hologram window 8 of Fig. 6) of a laser beam scanner comprises three layers of holograms stacked one above the other with transparent substrates disposed between the layers. Each hologram layer comprises two parallel strip-form holograms disposed side by side. The holograms of one layer intersect the holograms of the other layers in a central region of the scanning window 100 as seen from above. A laser beam scans the six strip-form holograms stacked in three layers in a predetermined order, in accordance with the arrangement of the optical scanning system, and thus traces out six scanning lines (a) to (f), corresponding respectively to the six holograms, on the window 100. The scanning beam diffracted by one hologram layer is not diffracted by the other two hologram layers and is emitted from the window in a predetermined direction as a continuous scanning beam. The diffracted scanning beams emitted from the window 100 trace out scanning lines (a') to (f') on an imaginary projection plane 101, which lines correspond respectively to the scanning lines (a) to (f) on the window 100. For example, the scanning beam (a) diagonally crossing the window 100 is diffracted by the hologram strip and traces a vertical scanning line (a') on the vertical plane 101. With this arrangement of the scanning pattern, it is possible to illuminate and read a bar code above the scanning window by at least one of the scanning beams, for various heights, locations and directions of the movement of the bar code.

## Claims

1. A laser beam scanner comprising:
a hologram window (8) incorporating a plurality of layer-form holograms (41a, 42a), arranged in overlying relationship to one another; and
optical means (99, 98, 94, 88, 91) arranged for causing a laser beam to be incident on the hologram window (8) and to scan the said layer-form holograms so that diffraction of the beam by the individual holograms (41a, 42a) produces respective scanning beams (45a, 47a) which emerge from a main face of the hologram window so as to trace out in turn, in an operation space adjacent to the said main face, respective scanning lines (46a, 48a) which intersect one another;
the arrangement being such that each of the said scanning beams, after leaving the hologram that produced that beam by diffraction, emerges from the said main face without having been incident upon any other one of the holograms at such an angle as to satisfy the Bragg condition therein.

2. A laser beam scanner as claimed in claim 1, wherein the layer-form holograms are strip-form holograms (41a, 42a) arranged in a crossing relationship with one another.

3. A laser beam scanner as claimed in claim 1 or 2, wherein the scanning beam (45a) produced by a first one (41a) of the layer-form holograms passes through a second one (42a) of those holograms, without satisfying the Bragg condition therein, before emerging from the said main face, and wherein the said laser beam passes through the first hologram (41a), without satisfying the Bragg condition therein, before being incident on the second hologram (42a), which second hologram diffracts that beam to produce a second one (47a) of the said scanning beams.

4. A laser beam scanner as claimed in claim 3, wherein the scanning beams produced respectively by the first and second holograms pass through a third one of the said layer-form holograms, without satisfying the Bragg condition therein, before emerging from the said main face, and wherein the said laser beam passes through the first and second holograms, without satisfying the Bragg condition therein, before being incident upon the third hologram, which third hologram diffracts that beam to produce a third one of the said scanning beams.

5. A laser beam scanner as claimed in any preceding claim, wherein the layer-form holograms (41a, 42a) are formed on respective transparent substrates (43, 44), which substrates are stacked and adhesively joined together.

6. A laser beam scanner as claimed in any one of claims 1 to 4, wherein one (52a) of the layer-form holograms is formed on an upper surface of a transparent substrate (53), and another (51a) of the holograms is formed on a lower surface of that substrate.

7. A laser beam scanner as claimed in any preceding claim, further comprising a laser source (97) mounted for providing the said laser beam; wherein the said optical means comprise:
a polygon mirror (94), arranged to receive and reflect the said laser beam, which polygon mirror is rotatable to cause the laser beam reflected thereby to scan in a plane substantially parallel to the said hologram window (8);
first stationary mirror means (88) arranged to receive the reflected laser beam from the said polygon mirror (94) and deflect that beam out of the said plane in a direction away from said hologram window (8); and
second stationary mirror means (91), arranged substantially parallel to the said hologram window (8), for receiving the laser beam reflected by the said first stationary mirror means (88) and reflecting that beam towards the said hologram window (8).

8. A laser beam scanner as claimed in claim 7, further comprising an optical detector (92), responsive to received light, and a concave mirror (90) mounted adjacent to the said first stationary mirror means (88) for receiving light scattered back from an object disposed in the said operation space so that the said scanning beams (45a, 47a) are incident thereon, which scattered light passes from the said object through the said hologram window (8) and is reflected in turn by the said second stationary mirror means (91) and the said first stationary mirror means (88) and the said polygon mirror (94) which directs that light onto the said concave mirror (90), which concave mirror reflects that light so that it is caused to converge towards the said optical detector (92);
wherein the said optical means include a further stationary mirror (98), arranged to receive the said laser beam from the said laser source (97) by way of an aperture (89) in the said concave mirror (90) and to reflect that laser beam back through the said aperture (89) towards the said polygon mirror (94).

9. A laser beam scanner as claimed in any preceding claim, wherein the said hologram window (8) is disposed at an upper side (81) of a box-shaped case (80) containing the other components of the scanner and being less than 85 mm in height, less than 250 mm in width and less than 310 mm in length.

## Patentansprüche

1. Laserstrahlscanner, umfassend:
ein Hologrammfenster (8) mit einer Vielzahl von Schichtformhologrammen (41a, 42a), die zueinander in übereinanderliegender Beziehung angeordnet sind; und
optische Mittel (99, 98, 94, 88, 91), die angeordnet sind, um zu bewirken, daß ein Laserstrahl auf das Hologrammfenster (8) einfällt und die Schichtformhologramme abtastet, so daß eine Beugung des Strahls durch die einzelnen Hologramme (41a, 42a) entsprechende Abtaststrahlen (45a, 47a) erzeugt, welche aus einer Hauptstirnseite des Hologrammfensters so austreten, damit sie wiederum in einem an die Hauptstirnseite angrenzenden Operationsraum entsprechende Abtastlinien (46a, 48a) schreiben, welche einander schneiden;
wobei die Anordnung derart ist, daß jeder der Antaststrahlen, nach Verlassen des Hologramms, welches diesen Strahl durch Beugung erzeugte, aus der Hauptstirnseite austritt, ohne auf irgendein anderes der Hologramme unter einem solchen Winkel eingefallen zu sein, daß die Bragg'sche Bedingung darin erfüllt ist.

2. Laserstrahlscanner wie in Anspruch 1 beansprucht, worin die Schichtformhologramme Streifenformhologramme (41a, 42a) sind, die einander kreuzend angeordnet sind.

3. Laserstrahlscanner wie in Anspruch 1 oder 2 beansprucht, worin der durch ein erstes (41a) der Schichtformhologramme erzeugte Abtaststrahl (45a) durch ein zweites (42a) dieser Hologramme dringt, ohne darin die Bragg'sche Bedingung zu erfüllen, bevor er aus der Hauptstirnseite austritt, und worin der Laserstrahl durch das erste Hologramm (41a) dringt, ohne daß er darin die Bragg'sche Bedingung erfüllt, bevor er auf das zweite Hologramm (42a) einfällt, welches zweite Hologramm diesen Strahl beugt, um einen zweiten (47a) dieser Abtaststrahlen zu erzeugen.

4. Laserstrahlscanner wie in Anspruch 3 beansprucht, worin die Abtaststrahlen, die jeweils vom ersten und zweiten Hologramm erzeugt werden, durch ein drittes der Schichtformhologramme dringen, ohne daß sie darin die Bragg'sche Bedingung erfüllen, bevor sie aus der Hauptstirnseite austreten, und worin der Laserstrahl durch das erste und zweite Hologramm dringt, ohne daß er darin die Bragg'sche Bedingung erfüllt, bevor er auf das dritte Hologramm einfällt, welches dritte Hologramm diesen Strahl beugt, um einen dritten der Abtaststrahlen zu erzeugen.

5. Laserstrahlscanner wie in irgendeinem vorhergehenden Anspruch beansprucht, worin die Schichtformhologramme (41a, 42a) auf jeweiligen transparenten Substraten (43, 44) gebildet sind, welche Substrate gestapelt und haftend zusammen verbunden sind.

6. Laserstrahlscanner wie in irgendeinem der Ansprüche 1 bis 4 beansprucht, worin eines (52a) der Schichtformhologramme auf einer oberen Oberfläche eines transparenten Substrates (53) gebildet ist, und ein anderes (51a) der Hologramme auf einer unteren Oberfläche dieses Substrates gebildet ist.

7. Laserstrahlscanner wie in irgendeinem vorhergehenden Anspruch beansprucht, welcher weiter umfaßt eine Laserquelle (97), die montiert ist, um den Laserstrahl vorzusehen; worin die optischen Mittel umfassen:
einen Polygonspiegel (94), der angeordnet ist, um den Laserstrahl zu empfangen und zu reflektieren, welcher Polygonspiegel drehbar ist, um zu bewirken, daß der dadurch reflektierten Laserstrahl in einer Ebene abtastet, die im wesentlichen parallel zum Hologrammfenster (8) ist;
erste stationäre Spiegelmittel (88), die angeordnet sind, den reflektierten Laserstrahl vom Polygonspiegel (94) zu empfangen und diesen Strahl aus der Ebene in eine Richtung weg vom Hologrammfenster (8) abzulenken; und
zweite stationäre Spiegelmittel (91), die im wesentlichen parallel zum Hologrammfenster (8) angeordnet sind, um den von den ersten stationären Spiegelmitteln (88) reflektierten Laserstrahl zu empfangen und um diesen Strahl gegen das Hologrammfenster (8) zu reflektieren.

8. Laserstrahlscanner wie in Anspruch 7 beansprucht, welcher weiter umfaßt einen optischen Detektor (92), der auf das empfangene Licht anspricht, und einen konkaven Spiegel (90), der an die ersten stationären Spiegelmittel (88) angrenzend montiert ist, um Licht zu empfangen, welches von einem Gegenstand, der im Operationsraum so angeordnet ist, daß die Abtaststrahlen (45a, 47a) auf ihn einfallen, zurückgestreut wird, welches gestreute Licht vom Gegenstand durch das Hologrammfenster (8) dringt und der Reihe nach von den zweiten stationären Spiegelmitteln (91) und den ersten stationären Spiegelmitteln (88) und dem Polygonspiegel (94) reflektiert wird, welcher dieses Licht auf den zweiten konkaven Spiegel (90) richtet, welcher konkave Spiegel dieses Licht so reflektiert, daß es veranlaßt wird, gegen den. optischen Detektor (92) zu konvergieren;
worin die optischen Mittel einen weiteren stationären Spiegel (98) enthalten, der angeordnet ist, um den Laserstrahl von der Laserquelle (97) über eine Öffnung (89) im konkaven Spiegel (90) zu empfangen und diesen Laserstrahl durch die Öffnung (89) zurück gegen den Polygonspiegel (94) zu reflektieren.

9. Laserstrahlscanner wie in irgendeinem vorhergehenden Anspruch beansprucht, worin das Hologrammfenster (8) an einer oberen Seite (81) eines kastenförmigen Gehäuses (80) angeordnet ist, welches die anderen Komponenten des Scanners enthält und weniger als 85 mm hoch, weniger als 250 mm breit und weniger als 310 mm lang ist.

## Revendications

1. Analyseur à faisceau de laser comportant :
une fenêtre à hologrammes (8) comprenant plusieurs hologrammes en forme de couches (41a, 42a), disposés de manière à se chevaucher l'un l'autre ; et
un dispositif optique (99, 98, 94, 88, 91) agencé pour qu'un faisceau de laser soit incident sur la fenêtre à hologrammes (8) et pour balayer lesdits hologrammes en forme de couches de manière que la diffraction du faisceau par les hologrammes individuels (41a, 42a) produise des faisceaux de balayage respectifs (45a, 47a) qui sortent par une surface principale de la fenêtre à hologrammes de manière à tracer, tour à tour, dans un espace d'exploitation voisin de ladite face principale, des lignes de balayage respectives (46a, 48a) qui se coupent entre elles ;
la disposition étant telle que chacun desdits faisceaux de balayage, après avoir quitté l'hologramme qui produit ce faisceau par diffraction, sorte de ladite face principale sans avoir été incident sur un hologramme quelconque sous un angle qui y satisfasse la condition de Bragg.

2. Analyseur à faisceau de laser selon la revendication 1, dans lequel les hologrammes en forme de couches sont des hologrammes en forme de bandes (41a, 42a), disposés de manière à se croiser l'un l'autre.

3. Analyseur à faisceau de laser selon la revendication 1 ou 2, dans lequel le faisceau de balayage (45a) produit par un premier (41a) des hologrammes en forme de couches traverse un second (42a) de ces hologrammes sans y satisfaire la condition de Bragg, avant de sortir de ladite face principale et dans lequel ledit faisceau de laser traverse le premier hologramme (41a) sans y satisfaire la relation de Bragg avant d'être incident sur le second hologramme (42a), ce second hologramme diffractant ce faisceau pour produire un second (47a) desdits faisceaux de balayage.

4. Analyseur à faisceau de laser selon la revendication 3, dans lequel le faisceau de balayage produit respectivement par le premier et par le second hologrammes traverse un troisième desdits hologrammes en forme de couches sans y satisfaire la condition de Bragg avant de sortir de ladite face principale et dans lequel ledit faisceau de laser traverse le premier et le second hologrammes sans y satisfaire la condition de Bragg avant d'être incident sur le troisième hologramme, ce troisième hologramme diffractant ce faisceau de manière à produire un troisième desdits faisceaux de balayage.

5. Analyseur à faisceau de laser selon l'une quelconque des revendications précédentes, dans lequel lesdits hologrammes en forme de couches (41a, 42a), sont formés sur des substrats transparents respectifs (43, 44), ces substrats étant empilés et collés ensemble.

6. Analyseur à faisceau de laser selon l'une quelconque des revendications 1 à 4, dans lequel l'un (52a) des hologrammes en forme de couches est formé sur une surface supérieure d'un substrat transparent (53) et un autre (51a) des hologrammes est formé sur une surface inférieure de ce substrat.

7. Analyseur à faisceau de laser selon l'une quelconque des revendications précédentes, comportant en outre une source de laser (97) montée pour produire ledit faisceau de laser ; dans lequel ledit dispositif optique comporte :
un miroir polygonal (94) agencé pour recevoir et pour réfléchir ledit faisceau de laser, ce miroir polygonal pouvant tourner pour que le faisceau de laser qu'il réfléchit balaye dans un plan pratiquement parallèle à ladite fenêtre à hologrammes (8) ;
un premier dispositif à miroir fixe (88) agencé pour recevoir le faisceau de laser réfléchi par le miroir polygonal (94) et pour dévier ce faisceau en dehors dudit plan dans une direction opposée à ladite fenêtre à hologrammes (8) ; et
un second dispositif à miroir fixe (91) agencé pratiquement parallèlement à ladite fenêtre à hologrammes (8) pour recevoir le faisceau de laser réfléchi par le premier dispositif à miroir fixe (88) et pour le réfléchir vers ladite fenêtre à hologrammes (8).

8. Analyseur à faisceau de laser selon la revendication 7, comportant en outre un détecteur optique (92) réagissant à la lumière reçue et un miroir concave (90) monté près dudit premier dispositif à miroir fixe (88) pour recevoir la lumière rediffusée par un objet disposé dans ledit espace d'exploitation de manière que lesdits faisceaux de balayage (45a, 47a ) soient incidents sur lui, ladite lumière diffusée passant dudit objet, à travers ladite fenêtre à hologrammes (8) et étant réfléchie à son tour par ledit second dispositif à miroir fixe (91) et ledit premier dispositif à miroir fixe (88) et ledit miroir polygonal (94) qui dirige cette lumière sur ledit miroir concave (90), ce miroir concave réfléchissant cette lumière de manière qu'elle converge vers ledit détecteur optique (92) ;
dans lequel ledit dispositif optique comporte un premier miroir fixe (98) agencé pour recevoir ledit faisceau de laser provenant de ladite source à laser (97) au moyen d'une ouverture (89) dans ledit miroir concave (90) et pour réfléchir ce faisceau de laser en arrière à travers ladite ouverture (89) vers ledit miroir polygonal (94).

9. Analyseur à faisceau de laser selon l'une quelconque des revendications précédentes, dans lequel ladite fenêtre à hologrammes (8) est disposée sur un côté supérieur (81) d'un boîtier en forme de boîte (80) contenant les autres composants de l'analyseur et dont la hauteur est inférieure à 85 mm, la largeur est inférieure à 250 mm et la longueur est inférieure à 310 mm.
